# EUROPÄISCHE PATENTSCHRIFT

(11) **EP 1 558 768 B1**
(45) Veröffentlichungstag und Bekanntmachung des Hinweises auf die Patenterteilung: **09.08.2006**
(21) Anmeldenummer: 03773877.0
(22) Anmeldetag: 29.10.2003
(51) Int. Cl.: C21C 1/08, C21C 7/00, C21C 5/00

(54) **VERFAHREN ZUR HERSTELLUNG KORROSIONSBESTÄNDIGER STÄHLE UND KORROSIONSBESTÄNDIGEN GUSSEISENS DURCH EIN LEGIEREN MIT POLYMERISIERTEM, FULLERENARTIGEM KOHLENSTOFF**
METHOD FOR THE PRODUCTION OF CORROSION-RESISTANT STEELS AND CAST IRONS BY ALLOYING WITH A POLYMERIZED, FULLERENE-LIKE CARBON
PROCEDE DE PRODUCTION D'ACIERS ANTICORROSION ET DE FONTE DE FER ANTICORROSION AU MOYEN D'UNE OPERATION D'ALLIAGE FAISANT APPEL A DU CARBONE POLYMERISE DE TYPE FULLERENE

(30) Priorität: 04.11.2002 HU 0203770
(43) Veröffentlichungstag der Anmeldung: 03.08.2005
(73) Patentinhaber: Kasuba, János, 1075 Budapest (HU)
(72) Erfinder: Kasuba, János, 1075 Budapest (HU)
(86) Internationale Anmeldenummer: PCT/HU2003/000089
(87) Internationale Veröffentlichungsnummer: WO 2004/042089

(56) Entgegenhaltungen:
- WO-A-02/066694
- US-A- 4 541 867
- US-A- 5 242 480
- DOUBLE, D.D. ET AL: "The nucleation and growth of graphite-the modification of cast iron." ACTA METALL. MATER. (1995) 43, (6), 2435-2442, PHOTOMICROGRAPHS, 31 REF. ISSN: 0956-7151, XP009028408
- ZHUKOV, A.A.: "Fullerenes and spheroidization of graphite in iron alloys." METAL SCIENCE AND HEAT TREATMENT (RUSSIA) (2001) 42, (7-8), 255-258, PHOTOMICROGRAPHS, SPECTRA, 20 REF. ISSN: 0026-0673, XP009028409
- ZHUKOV, A. A. ET AL: "New findings in carbon chemistry and their relation to cast irons" INDIAN FOUNDRY JOURNAL (1994), 40(6), 13-18A , XP009028417

## Beschreibung

Die Erfindung betrifft ein Verfahren zur Herstellung korrosionsbeständiger Stähle und korrosionsbeständigen Gußeisens, bei dem die Eisen-Kohlenstoff-Legierung (Fe-C) hergestellt wird, indem der Kohlenstoffgehalt des herzustellenden, die gewünschten Eigenschaften aufweisenden, entsprechend formbaren, gießbaren Stahles und/oder Gußeisens zum Teil durch Legieren mit polymerisiertem, fullerenartigem Kohlenstoff gewährleistet wird. Der polymerisierte, fullerenartige Kohlenstoff wird - unter Berücksichtigung des Kohlenstoffgehaltes der die notwendige und im Vergleich zur vorgeschriebenen in unterschiedlichem Maße verringerte Kohlenstoffmenge enthaltenden Fe-C-Legierung (Stahl, Gußeisen) - in entsprechender Menge bei einer im Vergleich mit der üblichen Überhitzung die liquidus-Temperatur um ein Geringeres übersteigenden Temperatur außerhalb der Herstellungsvorrichtung (Schmelzvorrichtung) in einem Kessel unter Vakuum dosiert und mit der flüssigen Fe-C-Legierung verringerten Kohlenstoffgehaltes legiert. Die Bildung von Graphit in Gußeisen wird in der Offenbarung Acta metall. mater. , Vol. 43, N° 6, pp. 2435-2442, 1995 beschrieben.

Für die Industrie (die Fahrzeugindustrie, die Bauindustrie, den Maschinenbau) ist Stahl einer der wichtigsten, vielleicht sogar der wichtigste Werkstoff. Darüber hinaus wird er noch als Werkzeugstahl und für Spezialzwecke gebraucht. Am meisten werden die unlegierten oder schwach legierten, im allgemeinen weniger als 0,6 % Kohlenstoff enthaltenden Baustähle verwendet.

Die Korrosion ist die über elektrochemische Prozesse verlaufende Zerstörung der Metalle und Legierungen, darunter insbesondere der Fe-C-Legierungen (Stähle, Gußeisen), einer der schädlichsten Faktoren, die auf diese wichtigen Baumaterialien wirken. Im engeren Sinne ist die Korrosion die Reaktion eines Metalles mit einem Nichtmetall, wobei diese Reaktion bei normaler oder sich davon nicht viel unterscheidender Temperatur, in Gegenwart von Wasser, wie Luftfeuchte, Tau oder Regenwasser, durch die Einwirkung der wäßrigen Lösung von Nichtmetallelementen verläuft. Dieses Nichteisenelement ist im allgemeinen der Sauerstoff. Der wichtigste Grund für die Korrosion der Eisen-Kohlenstoff-Legierungen ist die Tatsache, daß auf Grund des elektrochemischen Normalpotentials des Eisens Fe-Ionen in großer Menge in Lösung gehen.

Das Eisen neigt infolge seiner Affinität und auch in Abhängigkeit von anderen Faktoren stark zur Korrosion, es rostet. Die auf dem Eisen befindliche Rostschicht hat keinerlei Schutzwirkung, sondern fördert sogar noch die Korrosion, weil sie porös ist und daher die zur Korrosion erforderliche Feuchtigkeit speichert.

Die Fe-C-Legierungen, Stahl werden durch die gleichmäßige, entlang der Oberflächenkristallgrenze unter Spannung verlaufende Korrosion zerstört, während das Gußeisen in erster Linie durch die beiden vorgenannten Arten der Korrosion zu Grunde geht. Durch deren Wirkung werden Querschnitt, Festigkeit, Dehnung der Stahl- und Gußeisengegenstände in Abhängigkeit von der Zeit, manchmal sehr schnell, geringer.

Bei den Baustählen ist die verbreitetste Methode des Korrosionsschutzes die Herstellung von Schutzüberzügen (z.B. Metallüberzug, Farbe) oder die Verwendung von korrosionsbeständigen, mehrfach, in erster Linie mit Chrom und Nickel legierten . Fe-C-Legierungen. Mit diesen Methoden kann aber entweder der schädliche Prozeß nur zum Teil verhindert werden, oder aber die Methoden sind außerordentlich teuer.

Ziel der Erfindung war es, unter Ausnutzung der polymorphen Eigenschaften des Kohlenstoffes und der auf dem Gebiet der Fullerene erzielten neuesten wissenschaftlichen Erkenntnisse ein Eisen-Kohlenstoff-Legierungssystem zu schaffen, welches infolge seines verglichen mit dem Üblichen wesentlich passiveren Zustandes die Wirkung der am häufigsten auftretenden Korrosionsprozesse für viele Stahl- und Gußeisenarten stark vermindert bzw. praktisch völlig verhindert. Das Ziel wird durch das Verfahren gemaß Anspruch 1 erreicht.

Dem liegt zu Grunde, daß die polymerisierte, fullerenartige Kohlenstoff modifikation (legierender Kohlenstoff) komplexe Bindungen und eine mikrokristalline Struktur schafft, durch welche eine gleichmäßige und dichte Teilchenverteilung, ein passiveres Fe-C-Legierungssystem gewährleistet ist.

Erfindungsgemäß können Fe-C-Legierungen mit einem vom minimalen C-Gehalt bis zu 2 Masse%, d. h. etwa bis zu 8,75 Atom%, reichenden Kohlenstoffgehalt, also schmiedbare, walzbare Stähle, ferner Fe-C-Legierungen mit einem C-Gehalt von über 2 Masse%, prinzipiell bis 6,7 Masse%, also Gußeisen, hergestellt werden. Die gestellte Aufgabe wurde erfindungsgemäß dadurch gelöst, daß ein Anteil von 30-90 % des gewünschten Kohlenstoffgehaltes des herzustellenden Materials abweichend von der herkömmlichen Stahl- bzw. Gußeisenherstellung in einem Kessel, unter wenigstens 117 mPa (170 mbar) Vakuum, mit dem flüssigen Metall legiert wird. Der polymere, fullerenartige Kohlenstoff ist feinkörnig, deshalb muß er mit einem neutralen Gas durch ein Eintauchrohr in das vorher entsprechend desoxydierte, entschwefelte und legierte Stahlbad eingeblasen und/oder in brikettierter Form in dieses eingebracht werden.

Die Badbewegung unter Vakuum führt zu einer gleichmäßigen Verteilung des legierenden Kohlenstoffes. Daneben schützt das Vakuum auch den polymerisierten, fullerenartigen Kohlenstoff vor dem Zerfall. Als weitere Sicherung gegen den Zerfall wird die bisher übliche, auf die liquidus-Temperatur bezogene Überhitzung um 30 % gesenkt; abhängend von der Stahlart wird erfindungsgemäß um 20-40 °C, 40-80 °C überhitzt.

Durch die auf die liquidus-Temperatur bezogene geringere Überhitzung, die Kühlwirkung des zugesetzten legierenden Kohlenstoffes, den beim Behandeln, Legieren eintretenden Wärmeverlust wird während des schnell (in höchstens 5-10 Minuten) vorgenommenen Arbeitsganges die sich aus dem wachsenden Kohlenstoff gehalt der Legierung ergebende sinkende liquidus-Temperatur kompensiert, eine entsprechende Gießtemperatur ist gewährleistet. Um die Stabilität der entsprechenden Kohlenstoffmodifikation zu sichern, ist es zweckmäßig, das Gießen des Stahls oder Gußeisens bzw. seine Abkühlung unter die solidus-Temperatur gerechnet ab dem Beginn der Behandlung innerhalb von höchstens 30 Minuten vorzunehmen. Die übrigen technologischen Prozeßelemente der Stahl- und Gußeisenherstellung sind unverändert.

Das erfindungsgemäße Verfahren hat den Vorteil, daß bei einigen bedeutenden Typen der in großen Mengen hergestellten Stähle und Gußeisenarten (zum Beispiel Betonstahl, Profilstähle für den Bau, Profilstähle für die Fahrzeugindustrie, Bleche, Gußstücke für Leitungen und Kanäle) die Widerstandsfähigkeit gegen Korrosion bedeutend erhöht wird und dadurch ihre Lebensdauer um das Dreibis Sechsfache länger sein kann. In vielen Fällen kann auf den Korrosionsschutz durch Oberflächenüberzüge, Farbanstriche verzichtet werden. Der mit dem erfindungsgemäßen Verfahren hergestellte Stahl kann die anspruchsloseren unter den rostfreien, teuren, mit Chrom und Nickel legierten Stählen ersetzen.

Die zur Durchführung des erfindungsgemäßen Verfahrens benötigten Vorrichtungen, zum Beispiel Vakuumanlagen, Pulverblasvorrichtungen, stehen in der Eisenhüttenindustrie zur Verfügung. Eventuelle, zur völligen Verwirklichung des erfindungsgemäßen Verfahrens erforderliche kleinere Änderungen können schnell und mit geringen Kosten vorgenommen werden.

Die Erfindung wird an Hand der folgenden Beispiele näher erläutert, ist jedoch nicht auf diese Beispiele beschränkt.

### Beispiel 1

Die chemische Zusammensetzung des Stahls C60 ist folgende:
C 0,57-0,65 %, Mn 0,6-0,9 %, Si 0,2-0,4 %, Pₘₐₓ 0,03 %, Sₘₐₓ 0,03 % Dieser Stahl wird zum Beispiel in elektrischen Lichtbogenöfen herkömmlich hergestellt. Sein Widerstandsgrad gegen Korrosion ist "wenig widerstandsfähig" (Widerstandsfähigkeit 3-10 Jahre/mm).

Erfindungsgemäß wird nun der C-Gehalt des flüssigen Stahles auf 0,1-0,2 % eingestellt. Desoxydieren und Legieren werden auf herkömmliche Weise vorgenommen. Bei 0,1-0,2 % C-Gehalt ist die liquidus-Temperatur (der Schmelzbeginn) des Stahls 1525-1510 °C. Bei der Überhitzung- gemäß dem herkömmlichen Verfahren liegt die Gießtemperatur um 50-60 °C über der liquidus-Temperatur, d.h. gegossen wird bei 1585-1550 °C.

Im erfindungsgemäßen Verfahren ist die Temperatur der Überhitzung um 35-40 °C höher als die liquidus-Temperatur. Der Stahl wird also bei einer Temperatur von 1565-1545 °C in den Vakuumkessel abgelassen. Die Menge des Stahls beträgt 60 Tonnen. Sein Kohlenstoffgehalt muß durch Zusatz des polymerisierten, fulleroidartigen legierenden Kohlenstoffes um 0,4-0,45 % erhöht werden. Theoretisch braucht man dazu 320-360 kg legierenden Kohlenstoff. Unter Berücksichtigung von 5-8 % Schwund durch Abbrennen und sonstige Verluste werden als Menge des legierenden Kohlenstoffes 365 kg angesetzt. Der legierende Kohlenstoff hat eine Teilchengröße von 0,2-0,7 mm.

Der legierende Kohlenstoff wird unter 17m. Pa (170 mbar) Vakuum mit Argon als Trägergas mittels einer Pulverblasvorrichtung durch ein Eintauchrohr innerhalb von 5 Minuten in den flüssigen Stahl geblasen. Stahl von 0,6 % C-Gehalt hat eine liquidus-Temperatur von 1490-1475 °C, d. h., die zwischen der Abstichtemperatur und der liquidus-Temperatur der fertigen Legierung liegenden 70-75 °C sind zum Ausgleich der Wärmeverluste während der Behandlung und zur Sicherung einer guten Gießbarkeit ausreichend.

Aus dem aus der Vakuumvorrichtung herausgehobenen Kessel wird der fertige Stahl auf einem kontinuierlichen Mehrstrang-Stahlgießwerk innerhalb von 18-22 Minuten zu Blöcken von 180x180 mm gegossen.

Der Widerstandsgrad gegen Korrosion des auf diese Weise hergestellten Stahles ist "widerstandsfähig" (Widerstandsfähigkeit 10-30 Jahre/mm).

### Beispiel 2

### Herstellung von Chromstahl

An diesen Stahl werden betreffend die Korrosionsfestigkeit erhöhte Ansprüche gestellt. Er dient unter anderem zur Herstellung von Messern und Scheren.

### Grundzusammensetzung:

C 0,3-0,5 %, Si ~0,3 %, Cr ~14 %, Ni ~0,3 %, Mn<2,5 %
Der Stahl wird im elektrischen Lichtbogenofen hergestellt. Seine Widerstandsfähigkeit gegen Korrosion hat das Prädikat "widerstandsfähig" (etwa 30 Jahre).

Bei diesem Stahl wird die Widerstandsfähigkeit gegen Korrosion erfindungsgemäß dadurch erhöht, daß der Chromgehalt des Stahls auf 2,5-3 % vermindert wird und der Kohlenstoffgehalt im engeren 0,4-0,5 %-Bereich dadurch eingestellt wird, daß 80 % des C-Gehaltes durch Legieren mit polymerisiertem, fulleroidartigem Kohlenstoff gesichert werden.

Der Stahl wird zweckmäßig in einem elektrischen Lichtbogenofen hergestellt.

Dabei wird erfindungsgemäß in der ersten Phase der Stahlherstellung der Kohlenstoffgehalt des Stahles auf 0,05-1 %, der Mn,Si-Gehalt durch Zudosieren einer Fe-Si-Mn-Legierung, der Chromgehalt durch Legieren mit Fe-Cr eingestellt. Die liquidus-Temperatur des Stahles in dieser vor dem Einbringen des Kohlenstoffes vorliegenden Zusammensetzung beträgt 1500-1485 °C. Erfindungsgemäß wird der Stahl bei 1535-1525 °C in den unter Vakuum stehenden Kessel abgelassen. Die Menge des Stahles beträgt 50 Tonnen.

Der legierende polymerisierte, fulleroidartige Kohlenstoff wird in brikettierter Form zugesetzt. Die Briketts haben die Maße 30x20x15 mm, sind an den Seiten abgerundet und enthalten 1-3 % eines synthetischen Bindemittels.

Das C-Legieren wird unter einem Vakuum von 170 mbar durchgeführt, wobei die Briketts sich in der im Deckel des Vakuumkessels angeordneten sog. Schleusenkammer befinden und von dort in den flüssigen Stahl dosiert werden. Die Menge der Briketts bzw. des legierenden Kohlenstoffes ist die berechnete. Das Legieren dauert 3-5 Minuten. Die gleichmäßige Verteilung wird durch durch die mischende Bewegung des unter Vakuum stehenden flüssigen Stahlbades gewährleistet. Zusammensetzung der Briketts: C 97,5 %, Bindemittel 2 %, sonstiges 0,5 %.

Die berechnete Menge der Briketts aus dem legierenden polymerisierten, fulleroidartigen Kohlenstoff beträgt 250 kg. Während des Legierens sinkt die liquidus-Temperatur um etwa 70 °C, das ist ausreichend zur Kompensierung der Wärmeverluste und zur Gewährleistung der guten Gießbarkeit.

Aus dem Legierungskessel, der aus der Vakuumvorrichtung herausgehoben wurde, wird der fertig legierte Stahl auf einem kontinuierlichen Mehrstrang-Stahlgießwerk innerhalb von 18-22 Minuten zu Blöcken von 180x180 mm gegossen. Man erhält einen völlig korrosionsfesten Stahl.

Die Verbesserung, die durch das erfindungsgemäße Verfahren in der Korrosionsfestigkeit von Stählen erreicht werden kann, geht aus der folgenden Tabelle hervor.

| Stahltyp | Widerstandsfähigkeit des herkömmlich hergestellten Stahls (Jahre/mm) | Widerstandsfähigkeit des erfindungsgemäß hergestellten Stahls (Jahre/mm) |
|---|---|---|
| C 60 (Beispiel 1) | 10 | 25 |
| Chromstahl (Beispiel 2) | < 30 | > 30 |

## Patentansprüche

1. Verfahren zur Herstellung korrosionsbeständiger Stähle und korrosionsbeständigen Gußeisens, wobei 30-90 % des erforderlichen und/oder vorgeschriebenen Kohlenstoffgehaltes der herzustellenden Stahl- und/oder Gußeisentypen durch außerhalb des Stahlschmelz- bzw. Gußeisenofens in einem unter wenigstens 17 KPa (170 mbar) Vakuum stehenden Kessel erfolgendes Legieren mit polymerisiertem, fullerenartigem Kohlenstoff eingebracht und die Überhitzung des Stahles über die liquidus-Temperatur hinaus im Vergleich zu den üblichen Stahlherstellungsverfahren um etwa 30 % geringer, vom Stahltyp abhängend zwischen 20 °C und 40 °C, 40 °C und 80 °C gehalten und der fertige Stahl bzw. das fertige Gußeisen gerechnet ab dem Beginn der Behandlung innerhalb von höchstens 30 Minuten in die gewünschte Form gegossen und unter die solidus-Temp eratur gekühlt wird.

2. Verfahren nach Anspruch 1, wobei der legierende Kohlenstoff in feinteiliger Form mittels einer Pulverblasvorrichtung mit einem inerten Trägergas durch ein Eintauchrohr in die Schmelze eingebracht wird.

3. Verfahren nach Anspruch 1, wobei der legierende Kohlenstoff in brikettierter Form in die Schmelze eingebracht wird.

4. Verfahren nach einem der Ansprüche 1-3, wobei der fertige flüssige Stahl auf einer kontinuierlichen Stahlgießvorrichtung zu Blöcken gegossen wird.

5. Verfahren nach einem der Ansprüche 1-3, wobei der fertige flüssige Stahl in Kokillen zu Blöcken gegossen wird.

6. Verfahren nach einem der Ansprüche 1-3, wobei aus der fertigen flüssigen Stabllegierung durch Gießen in entsprechende Formen Stahlgußstücke hergestellt werden.

7. Verfahren nach einem der Ansprüche 1-3, wobei aus dem mehr als 2 Masse%, höchstens 6,7 Masse% Kohlenstoff enthaltenden, fertigen flüssigen Gußeisen durch Gießen in entsprechende Formen Gußeisenstücke hergestellt werden.

## Claims

1. This is a process for producing corrosion-proof Fe-C alloys, steels and cast irons; 30-90 mass % of the required and/or prescribed carbon content of the steel and/or cast iron types to be produced should be polymerized, fulleren-type of carbon, outside the steel or cast iron producing melting furnace, alloyed in a ladle under minimum 17 kPa vacuum, decreasing the superheatedness of the steel above liquidus temperature by 30 % compared to regularly used steel manufacturing processes, keeping the steel and/or cast iron at a temperature of 20-40 or 40-80 °C (depending on the steel type), and then refreshing and solidifying the resuming liquid steel or cast iron below solidus temperature in the requested mould and in the requested way, within maximum 30 minutes from adding the fulleren-type carbon to them.

2. The process described in section 1: the carbon used for alloying is added to the melt in a finely-granular form, through a submerged tube used for blowing in powder, applying neutral carrier gas.

3. The process described in section 1: the carbon used for alloying is added to the melt in the form of a briquette.

4. The process described in sections 1, 2 and 3: bloom steel is produced by continuously solidifying the resulting liquid steel.

5. The process described in sections 1, 2 and 3: the resulting liquid steel is solidified die-cast, and then steel billets are produced.

6. The process described in sections 1, 2 and 3: the resulting liquid steel alloy is cast into a mould, thus producing cast steel.

7. The process described in sections 1, 2 and 3: the resulting liquid cast iron which exceeds 2 mass % and has a maximum 6.7 mass % carbon content is cast into the required mould, and thus cast iron is produced.

## Revendications

1. Procédure pour la production d'aciers résistants à la corrosion et de la fonte de fer anticorrosive **caractérisée par le fait que** 30 à 90 % de la teneur en carbone nécessaire et/ou prescrite des types d'acier ou de fonte à produire sont tenus par un alliage en tant que carbone polymérisé à caractère de terre décolorante à blanchir, en dehors du four servant à la fabrication de l'acier de fusion et/ou de la fonte, assurée par un alliage ayant lieu dans une poche sous vide d'au moins 17 kPa, en réduisant, par rapport aux procédures de fabrication d'acier généralement utilisées, de 30 % le surchauffage au-dessus de la température liquidus de l'acier, en le maintenant - en fonction des types d'acier - à une température variant entre 20 et 40, 40 et 80 °C et en refroidissant, en solidifiant l'acier liquide fini ou la fonte dans un délai de tout au plus 30 minutes à compter du début du traitement sous la forme et de la manière souhaitées et en descendant sous la température solidus.

2. La procédure figurant au point 1 **caractérisée par le fait que** le carbone d'alliage est introduit dans la masse fondue sous la forme de grains fins, en appliquant un gaz porteur neutre, à l'aide d'un dispositif servant à l'insufflation en état pulvérisé et muni d'un tube plongeur.

3. La procédure figurant au point 1 **caractérisée par le fait que** le carbone d'alliage est introduit dans la masse fondue sous une forme agglomérée en briquettes.

4. Une des procédures figurant aux points 1, 2 et 3 **caractérisée par le fait que** l'acier liquide fini est solidifié sur un dispositif de coulage ou de moulage d'acier continu pour en produire des billettes d'acier.

5. Une des procédures figurant aux points 1, 2 et 3 **caractérisée par le fait que** l'acier liquide fini est solidifié en le coulant dans une coquille pour en produire des lingots d'acier.

6. Une des procédures figurant aux points 1, 2 et 3 **caractérisée par le fait que** l'acier alliage liquide fini est coulé dans une coquille appropriée pour en produire des moulages d'acier, des pièces en acier.

7. Une des procédures figurant aux points 1, 2 et 3 **caractérisée par le fait que** la fonte liquide finie dont la teneur en carbone dépasse les 2 % de masse, mais au maximum 6,7 % de masse, est coulée dans une coquille appropriée pour en obtenir des pièces en fonte, des moulages de fonte.
